# EUROPEAN PATENT SPECIFICATION

(11) **EP 2 689 561 B1**
(45) Date of publication and mention of the grant of the patent: **09.03.2016**
(21) Application number: 12714845.0
(22) Date of filing: 14.03.2012
(51) Int. Cl.: H04L 12/46, H04L 12/707, H04L 12/705, H04L 12/703, H04L 12/753

(54) **DIRECTING TRAFFIC IN AN EDGE NETWORK ELEMENT OPERABLE TO PERFORM LAYER 2 DATA FORWARDING AND SUPPORTING ANY OF VARIOUS SPANNING TREE PROTOCOLS**
VERKEHRSLENKUNG IN EINEM EDGE-NETZELEMENT ZUR DURCHFÜHRUNG VON SCHICHT-2-DATENWEITERLEITUNG UND UNTERSTÜTZUNG VERSCHIEDENER SPANNBAUM-PROTOKOLLE
CONTRÔLE DU TRAFIC DANS UN ÉLÉMENT DE RÉSEAU DE BORD UTILISABLE POUR EFFECTUER L'ACHEMINEMENT DE DONNÉES DE COUCHE 2 ET SUPPORTANT N'IMPORTE LEQUEL DES DIFFÉRENTS PROTOCOLES SPANNING TREE

(30) Priority: 24.03.2011 US 201113070969
(43) Date of publication of application: 29.01.2014
(73) Proprietor: Telefonaktiebolaget LM Ericsson (publ), 164 83 Stockholm (SE)
(72) Inventor: MUSKU, Amarender, Santa Clara, CA 95054 (US); CHADHA, Simranjit Singh, Santa Clara, CA 95054 (US)
(74) Representative: Kühn, Friedrich Heinrich
(86) International application number: PCT/IB2012/051217
(87) International publication number: WO 2012/127369

(56) References cited:
- US-A1- 2003 065 814
- US-A1- 2004 151 181
- US-A1- 2006 047 851
- US-A1- 2006 203 735
- US-A1- 2008 240 129

## Description

### FIELD

Embodiments of the invention relate to the field of network elements; and more specifically, to directing traffic in an edge network element operable to perform Layer 2 data forwarding and supporting any of various spanning tree protocols.

### BACKGROUND

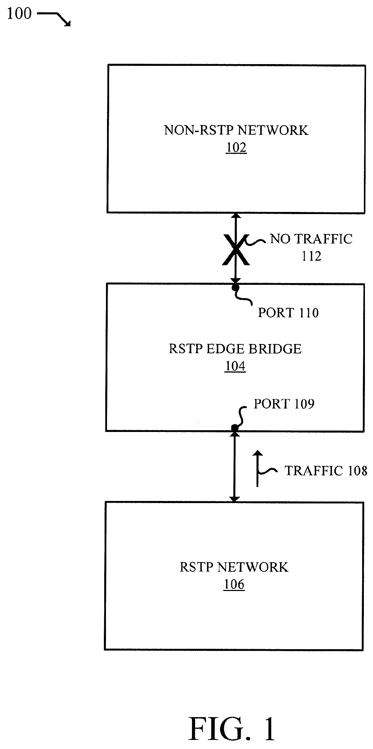

**FIG. 1** is a block diagram of an example network 100 where network traffic loss may be experienced at a Rapid Spanning Tree Protocol (RSTP) edge bridge 104 deployed at an edge of an RSTP network 106 between the RSTP network 106 and a non-RSTP network 102. In one aspect, the non-RSTP network 102 may be a Multiprotocol Label Switching (MPLS) network, although this is not required. The RSTP network 106 is operable to send traffic 108 to the RSTP edge bridge 104. It is intended that the RSTP edge bridge 104 forward the received traffic 108 to the non-RSTP network 102.

The RSTP edge bridge 104 is operable to support and run RSTP, but RSTP does not run and is not supported in the non-RSTP network 102. A first port 109 of the RSTP edge bridge 104 is an RSTP port that runs and supports RSTP. However, a second port 110 of the RSTP edge bridge 104 is not an RSTP port and does not run or support RSTP. Since, RSTP is not supported by the non-RSTP network 102, or by the second port 110, it is possible that the RSTP running in the RSTP network 106 and on the RSTP edge bridge 104 may allow a primary path leading up to the RSTP edge bridge 104 to be available at a time when the second port 110 is unavailable. For example, this may occur if the RSTP edge bridge 104 and second port 110 go down (e.g., in the event of a power failure) and need to be brought back up. As soon as first port 109 of the RSTP edge bridge is up, it may exchange configuration messages to the RSTP network 106, which upon RSTP convergence may configure the primary path to lead up to the RSTP edge bridge 104. In some cases, the second port 110 may take more time to come back up than the first port 109. For example, the second port 110 may connect to a pseudowire, which may take more time to come up due in part to more signaling being involved.

A problem is that network traffic 108 may be forwarded to the RSTP edge bridge 104 along the primary path at a time when the second port 110 is not available to forward the received network traffic 108 to the non-RSTP network 102. This is shown in the illustration by the indication no traffic 112. This may result in traffic loss within the RSTP edge bridge 104 due to the received network traffic 108 essentially being "black holed" within the RSTP edge bridge 104. Representatively, in the case of a pseudowire link between the RSTP edge bridge 104 and the non-RSTP network 102, there may be around 1-2 seconds of dropped network traffic. However, in many applications loss of so much network traffic is undesirable. For example carrier networks typically desire that no more than several hundred milliseconds, or in some cases less than about fifty milliseconds worth of network traffic is dropped.

US-A1-2006/0047851 discloses a computer network that includes a core network connected with first and second Ethernet access domain networks, each of Ethernet access domain networks including a user-facing provider edge (u-PE) device, a primary network-facing provider edge (n-PE) device, a redundant n-PE device, and a plurality of aggregation provider edge (Agg-PE) devices providing connectivity between to the u-PE device and the primary and redundant n-PE devices, the Agg-PE devices running a spanning-tree protocol (STP) algorithm. A primary data path is provided along with first and second redundant data paths that include first and second redundant pseudowires (PWs), respectively, connected across the core network, the first and second redundant data paths being blocked by the STP algorithm when the primary data path is available, the STP algorithm unblocking either the first or second redundant data path in response to a failure of the primary data path.

US-A1-2003/0065814 discloses a transmission unit that improves communication quality by making effective use of a line to a blocked port in compliance with a spanning tree protocol. Bridges have bridge ports and communicate at the layer 2 level. Physical ports are used for sending and receiving frames via lines. A bridge port state monitoring section monitors the state of ports. A port correspondence table managing section stores and manages a port correspondence table including the state of the bridge ports and the correspondence between the bridge ports and the physical ports in the unit and the correspondence between bridge ports and physical ports in an opposite unit. A switching section switches bridge ports and physical ports on the basis of the port correspondence table so that a line disconnected logically can be used for providing other communication services. A port state management control section sends and receives port state information.

US-A1-2006/0203735 discloses a bridge apparatus, which enables communications to continue even if a fault or a disability of operation occurs, causing the spanning tree protocol to become inoperable and, furthermore, provides a network capable of keeping track of status changes thereof, are provided by a bridge apparatus constituting a network connected with other bridge apparatus, comprising an STP protocol processing unit for carrying out a spanning tree protocol; a port for transmitting and receiving a bridge protocol data unit with the other bridge apparatus; a fault detection unit for detecting a fault of the spanning tree protocol by monitoring the STP protocol processing unit; and a for-fault time BPDU transmission unit for transmitting a for-fault time bridge protocol data unit to the other bridge apparatus by way of the port if the fault detection unit detects a fault, or a disability of operation, of the spanning tree protocol.

### SUMMARY

The present invention provides a method performed in a Layer 2 data forwarding network element according to Claim 1.

The present invention also provides a network element according to Claim 6.

### BRIEF DESCRIPTION OF THE DRAWINGS

The invention may best be understood by referring to the following description and accompanying drawings that are used to illustrate embodiments of the invention. In the drawings:
**FIG. 1** is a block diagram of an example network where network traffic loss may be experienced at a Rapid Spanning Tree Protocol (RSTP) edge bridge deployed at an edge of an RSTP network between the RSTP network and a non-RSTP network.
**FIG. 2** is a block diagram illustrating an example embodiment of a network element that is suitable for implementing embodiments of the invention.
**FIG. 3** is a block flow diagram of an example embodiment of a method performed in a Layer 2 data forwarding network element for reducing network traffic loss by the Layer 2 data forwarding network element.
**FIG. 4** is a block flow diagram of an example embodiment of a method performed in a Layer 2 data forwarding network element for reducing network traffic loss by the Layer 2 data forwarding network element while a port of the Layer 2 data forwarding network element is unavailable.
**FIGs. 5A-5G** are block diagrams illustrating different stages of an example embodiment of a method in an example Layer 2 data forwarding network for directing traffic away from a bridge while a port of the bridge is unavailable.
**FIG. 6** illustrates a block diagram of a conventional RSTP BPDU.
**FIG. 7** **is** a block diagram illustrating an example embodiment of a network element operable to perform layer 2 data forwarding.

### DESCRIPTION OF EMBODIMENTS

In the following description, numerous specific details are set forth, such as, for example, particular protocols, particular network topologies, particular bridge configurations, particular message formats, particular priority values, etc. However, it is understood that embodiments of the invention may be practiced without these specific details. In other instances, well-known circuits, structures and techniques have not been shown in detail in order not to obscure the understanding of this description.

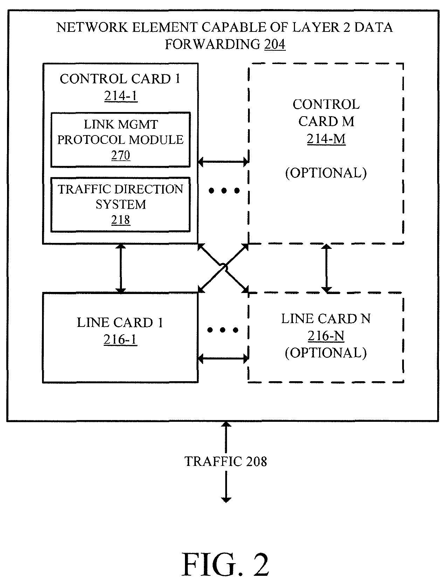

**FIG. 2** is a block diagram illustrating an example embodiment of a network element 204 that is suitable for implementing embodiments of the invention. As used herein, a network element (e.g., a bridge, switch, router, or combination (e.g., multiple services network element)) is a piece of networking equipment, including hardware and software, which communicatively interconnects other equipment on a network (e.g., other network elements, end stations, etc.).

The network element 204 is capable of Open Systems Interconnection (OSI) Model Layer 2 data forwarding (sometimes referred to as data link layer data forwarding). In some embodiments, the network element 204 is a bridge or switch. In other embodiments, the network element 204 is not necessarily a bridge or switch but is operable to perform bridging, switching, or other Layer 2 data forwarding. As is known, bridging is a data packet forwarding technique used in packet-switched networks to connect multiple network segments at Layer 2 of the OSI Model. Representatively, a bridge may use packet flooding and examination of source addresses in received packet headers to locate unknown equipment on the network. Once the equipment has been located, the bridge may record or store the location of the equipment in a table, database, or data structure where media access control (MAC) addresses are stored. The bridge may direct or forward frames according to the hardware assigned MAC addresses.

Network elements are commonly separated into a control plane and a data plane (sometimes referred to as a forwarding plane or a media plane). The network element 204 includes a set of one or more control cards, including at least a first control card 214-1, and optionally one or more other control cards 214-M. The network element also includes a set of one or more line cards, including at least a first line card 216-1, and optionally one or more other line cards 216-N. In one example embodiment, there may be only one control card 214-1 and one line card 216-1. The set of line cards make up the data plane, while the set of control cards provide the control plane and exchange packets with external network elements through the line cards. If desired, the network element may optionally have one or more service cards (sometimes referred to as resource cards). The cards of the network element are coupled together through one or more mechanisms (e.g., a first full mesh coupling the line cards and a second full mesh coupling all of the cards). The one or more mechanisms couple the one or more control cards together, couple the one or more line cards with the one or more control cards, and couple the one or more line cards together.

In some embodiments, the network element may utilize a distributed control plane, although this is not required. The distributed control plane may include an active primary control card (e.g., control card 1), a standby primary control card (e.g., control card M), at least one secondary control or line card (e.g., line card 1). The standby primary control card may mirror the active primary control card, and serve as a hot backup in case the active primary control card fails. During operation, the active primary control card may provide distributed control plane process instances to the secondary control or line card(s). The control cards may all run in active mode and may receive, process, and send signaling messages. In one aspect, session redundancy may be supported in a way that each session is active on one control card and is passive or backup on another control card.

In some embodiments, the network element 204 may be configured to be deployed at an edge of a first network (e.g., an RSTP network (e.g., RSTP network 106), a Spanning Tree Protocol (STP) network, a Per-VLAN (virtual Local Area Network) Spanning Tree (PVST) network, a Rapid Per-VLAN Spanning Tree (R-PVST) network, a Multiple Spanning Tree Protocol (MSTP) network, networks based on future versions or replacements for these protocols, other spanning tree protocol networks, etc.). The network element may be disposed at the edge of the first network between the first network and a second network (e.g., a non-RSTP network (e.g., non-RSTP network 102), an MPLS network, a Layer 2.5 network, another label switched network, another core network, etc.). For example, the network element 204 may be configured to be an edge bridge (e.g., RSTP edge bridge 104). The first network may be operable to support a link management protocol (e.g., STP, RSTP, PVST, R-PVST, MSTP, future versions of these protocols, replacements for these protocols, or another spanning tree protocol) that is operable to provide redundant paths through the first network and operable to avoid layer 2 loops in the first network. The second network may not support the same link management protocol.

Referring again to **FIG. 2****,** the network element 204 includes a link management protocol module 270. The link management protocol module 270 is operable to support the link management protocol (e.g., STP, RSTP, PVST, R-PVST, MSTP, future versions of these protocols, replacements for these protocols, or other spanning tree protocols) to provide the redundant paths through the first network and to avoid the layer 2 loops in the first network.

The network element 204 also includes a traffic direction system 218 in communication with the link management protocol module 270. The traffic direction system 218 is operable to direct network traffic 208. For example, the traffic direction system 218 may direct the network traffic 208 away from the network element 204, the traffic direction system 218 may direct the network traffic into the network element 204, or the traffic direction system 218 may direct a portion of the network traffic 208 into or away from the network element 204. Advantageously, as will be explained further below, the traffic direction system 218 may, in some embodiments, help to reduce network traffic loss within the network element 204.

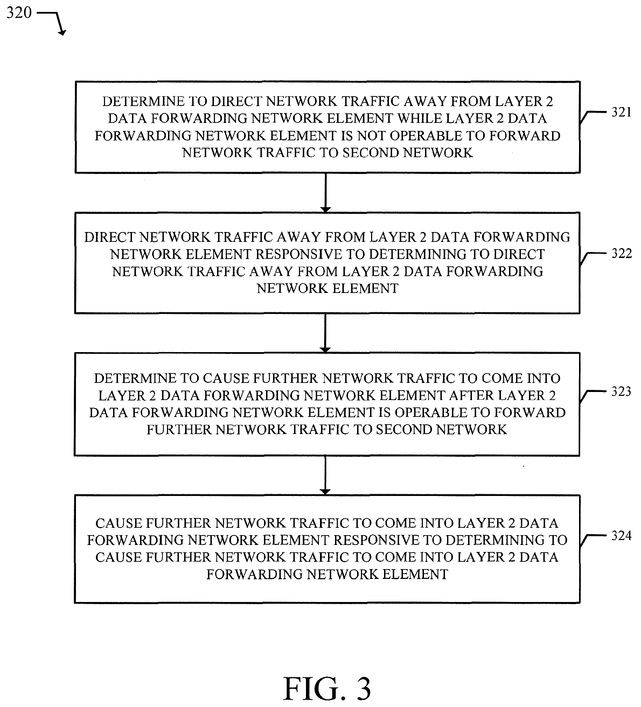

**FIG. 3** is a block flow diagram of an example embodiment of a method 320 performed in a Layer 2 data forwarding network element for reducing network traffic loss by the Layer 2 data forwarding network element. The method may be performed within a network element that is deployed at an edge of a first network (e.g., an RSTP network (e.g., RSTP network 106), a STP network, a PVST network, an R-PVST network, an MSTP network, a network based on a future version or replacement for one of the aforementioned protocols, another spanning tree protocol network, etc.). The network element may be at an edge of a second network (e.g., a non-RSTP network (e.g., non-RSTP network 102), an MPLS network, a Layer 2.5 network, another label switched network, another core network, etc.). The first network may support a link management protocol (e.g., STP, RSTP, PVST, R-PVST, MSTP, a future version or replacement for one of these protocols, or another spanning tree protocol, etc.) that is operable to provide redundant paths through the first network (e.g., a primary path and an alternate path) and operable to avoid layer 2 loops in the first network. The second network may not support the same Layer 2 link management protocol.

STP and RSTP are layer 2 or data link layer network protocols that have been standardized by 802.1DTM IEEE Standard for Local and metropolitan area networks Media Access Control (MAC) Bridges, from the IEEE Computer Society, June 2004, ISBN 07381-3982-3 SS95213. STP and RSTP help to ensure a loop-free topology (e.g., prevent bridge loops) for any bridged local area network (LAN). STP and RSTP also allow a network to include redundant or backup paths, for example in case an active path fails. STP and RSTP allow only one active, primary path at a time between any two network elements, which helps to prevent the loops, but establishes a redundant, alternate path as a backup for the primary path in case the primary path should fail. STP and RSTP create a spanning tree within a network of interconnected layer 2 capable network elements (e.g., bridges, switches, etc.), and disables those links that are not part of the spanning tree, leaving a single active primary path between any two network nodes.

Referring again to **FIG. 3****,** a determination is made to direct network traffic away from the Layer 2 data forwarding network element, while the Layer 2 data forwarding network element is not operable to forward the network traffic to the second network, at block 321. Then, the network traffic is directed away from the Layer 2 data forwarding network element at block 322, responsive to determining to direct the network traffic away from the Layer 2 data forwarding network element.

In some embodiments, directing the network traffic away from the network element at block 322 may include transmitting a first message to the first network that is operable to direct the network traffic away from the network element. In some embodiments, the first message may include an unfavorable priority value for the network element.

In STP and RSTP, each bridge or other network element has a bridge identifier which includes a unique identifier (e.g., a MAC address) and a configurable priority number for the bridge or other network element. When comparing bridges or other network element during STP or RSTP convergence, the priority numbers are compared first. The bridge or other network element with the smallest/lowest magnitude priority number is considered to have the better priority and may be selected as the root node. If the two bridges have equal priority, then the MAC addresses may be compared and the bridge or other network element with the smallest/lowest MAC address may be selected as the root node. If the decision can't be made based on the bridge identifier, then other parameters of a spanning tree priority vector may be evaluated. The bridges or other network elements use data frames or messages known as Bridge Protocol Data Units (BPDUs) to exchange bridge identifiers, spanning tree priority vector parameters, and other information. The BPDUs may be exchanged periodically, or from time to time, for example every 1-10 seconds, and enable the bridges or network elements to monitor network changes and start and/or stop forwarding on ports as appropriate.

Referring again to block 322 of **FIG. 3****,** in some embodiments, the first message may be a bridge protocol data unit (BPDU), for example an STP BPDU or RSTP BPDU, having a bridge identifier field and/or spanning tree priority vector that includes the unfavorable priority value. The unfavorable priority value may be increased in magnitude relative to an immediately prior priority value transmitted by the network element a few seconds prior. By convention in STP, RSTP, and certain other spanning tree protocols, a larger magnitude priority value is considered more unfavorable/worse than a smaller magnitude priority value, although other protocols may employ different conventions. In one embodiment, the transmitted priority value may be more unfavorable than a corresponding next root priority value for a next root network element. The transmitted unfavorable priority value may be operable, for example when it is more unfavorable than the corresponding next root priority value, to cause a primary path to move away from the network element. The transmitted first message may cause the network element to not be a part of the primary path even if it really is a part of the least cost path. In other embodiments, the transmitted priority value may be equal to the next root priority, but the transmitted BPDU may have another parameter of a spanning tree priority vector that is more unfavorable than a corresponding next root parameter, such that according to predetermined topology calculation rules, the network traffic will be directed away from the network element.

Referring again to **FIG. 3****,** a determination is made to direct or cause further network traffic to come into the Layer 2 data forwarding network element, after the Layer 2 data forwarding network element is operable to forward the further network traffic to the second network, at block 323. Then, the further network traffic is caused to come into the Layer 2 data forwarding network element at block 324, responsive to determining to cause the further network traffic to come into the Layer 2 data forwarding network element.

In some embodiments, causing the further network traffic to come into the network element at block 324 may include transmitting a second message to the first network that is operable to cause the further network traffic to come into the network element. In some embodiments, the first message may include a favorable priority value for the network element. In some embodiments, the first message may be a BPDU, for example an STP or RSTP BPDU, having a bridge identifier field and/or spanning tree priority vector that includes a favorable priority value. The favorable priority value may be decreased in magnitude relative to an immediately prior priority value transmitted by the network element a few seconds prior (e.g., the unfavorable priority value transmitted at block 322). By convention in STP, RSTP, and certain other spanning tree protocols, a smaller magnitude priority value is considered more favorable/better than a greater magnitude priority value, although other protocols may employ different conventions. In one embodiment, the transmitted priority value may be more favorable than a corresponding next root priority value for a next root network element. The transmitted favorable priority value may be operable, for example when it is more favorable than the corresponding next root priority value, to cause the primary path to return to the Layer 2 data forwarding network element. In other embodiments, the transmitted priority value may be equal to the next root priority, but the transmitted BPDU may have another parameter of a spanning tree priority vector that is more favorable than a corresponding next root parameter, such that according to predetermined topology calculation rules, the network traffic will be directed back into the network element.

In some embodiments, the determinations at blocks 321 and 323 may be made based at least in part on health, availability, or other status of a port of the Layer 2 data forwarding network element (e.g., port 110 in **FIG. 1****,** or another port that is configured to forward data from the network element to the second network).

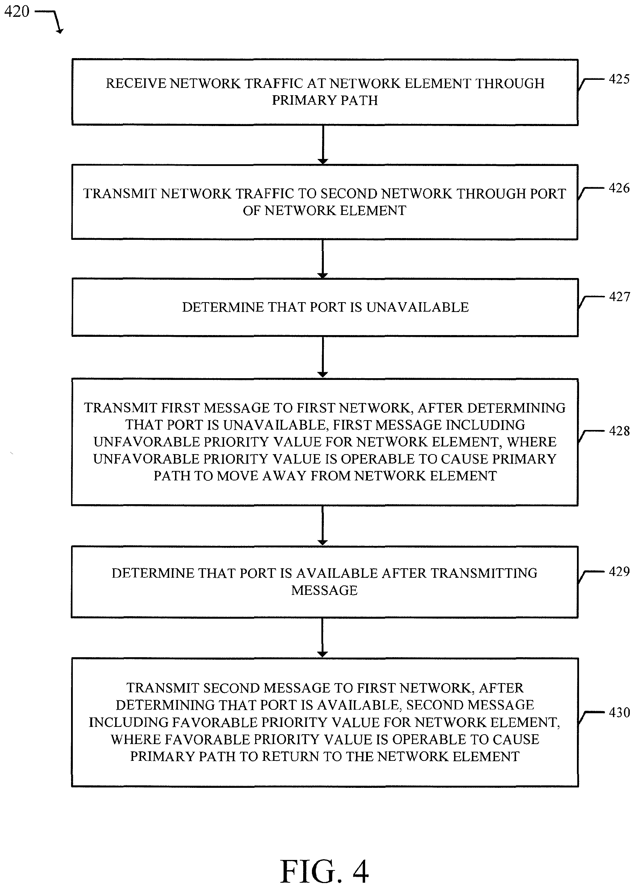

**FIG. 4** is a block flow diagram of an example embodiment of a method 420 performed in a Layer 2 data forwarding network element for reducing network traffic loss by the Layer 2 data forwarding network element while a port is unavailable. The method may be performed within a network element that is deployed at an edge of a first network (e.g., an RSTP network, an STP network, an RSTP network, a PVST network, an R-PVST network, an MSTP network, a network based on a future version or replacement for one of the aforementioned protocols, another spanning tree protocol network, etc.). The network element may be at the edge of the first network between the first network and a second network (e.g., a non-RSTP network, an MPLS network, a Layer 2.5 network, another label switched network, another core network, etc.). The first network supports a spanning tree protocol (e.g., STP, RSTP, PVST, R-PVST, MSTP, a future version or replacement for one of these protocols, or another spanning tree protocol, etc.) that is operable to provide a primary path and an alternative path through the first network and operable to avoid layer 2 loops in the first network. The second network does not support the same spanning tree protocol.

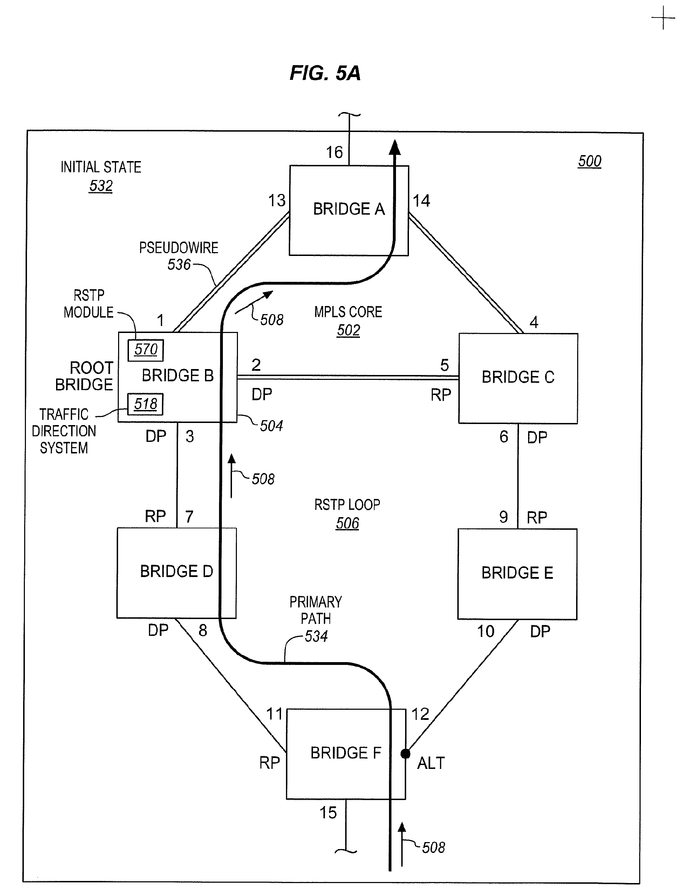

To better illustrate the operations, **FIG. 4** will be described with reference to the example embodiments shown in **FIGs. 5A-5G****.** However, it should be understood that the operations of the block flow diagram of **FIG. 4** can be performed by embodiments other than those discussed with reference to the example embodiments shown in **FIGs. 5A-5G****.** Moreover, the example embodiments shown in **FIGs. 5A-5G** can perform operations different than those discussed with reference to the block flow diagram of **FIG. 4****.**

Referring to **FIG. 4****,** network traffic is received at the Layer 2 data forwarding network element through the primary path, at block 425. The network traffic is transmitted to the second network through a port of the network element, at block 426.

**FIG. 5A** is a block diagram illustrating an initial state 532 of a network 500 in which network traffic 508 is received at a bridge B 504 through a primary path 534 and the network traffic 508 is transmitted to a bridge A of an MPLS core 502 through a port 1 of bridge B. The network 500 includes bridges A-F. These bridges may be actual bridges, or may be network elements (e.g., multi-services network elements) having bridging or other Layer 2 data forwarding capability. It is to be understood that the illustrated network 500 is only one example of a suitable network, and that other networks having fewer or more bridges and/or alternate connections for the bridges are also suitable.

Port 1 of bridge B is connected by a link to port 13 of bridge A. Port 2 of bridge B is connected by a link to port 5 of bridge C. Port 4 of bridge C is connected by a link to port 14 of bridge A. Port 3 of bridge B is connected by a link to port 7 of bridge D. Port 8 of bridge D is connected by a link to port 11 of bridge F. Port 12 of bridge F is connected by a link to port 10 of bridge E. Port 9 of bridge E is connected by a link to port 6 of bridge C. Port 15 of bridge F may be connected to other network elements or user devices (not shown) and may receive network traffic. Similarly, others of the bridges B-E may have other ports (not shown) connected to other network elements or user devices (not shown) to receive network traffic.

In one embodiment, as indicated by the double lines, each of the links connecting ports 1 and 13, ports 2 and 5, and ports 4 and 14 may be a pseudowire, although the scope of the invention is not so limited. In one embodiment, the link connecting ports 1 and 13 may be a pseudowire 536, although the scope of the invention is not so limited. A pseudowire may emulate operation of a transparent wire carrying a service, for example a point-to-point connection-oriented service or other layer 2 service, over a packed-switched network. Alternatively, other interfaces besides pseudowires are also suitable and may be used.

Bridges A-C are configured as an MPLS core 502, which represents an MPLS network or domain. MPLS is a protocol agnostic communication mechanism for packet switched networks that directs and carries data packets from one network element or node to the next by using MPLS labels assigned to the data packets. MPLS is an example of a label switching protocol or mechanism. MPLS nodes (e.g., network elements supporting, aware of, or running MPLS) may make packet forwarding decisions based on the contents of the MPLS labels without needing to examine the contents of the data packets themselves. MPLS operates at an OSI Model layer that is between the conventionally accepted boundaries of the Layer 2 or data link layer and the Layer 3 or network layer, and accordingly MPLS is sometimes referred to as a Layer 2.5 protocol. MPLS can be used to carry various different types of traffic, such as, for example, IP packets, Asynchronous Transfer Mode (ATM) frames, Synchronous Optical Network (SONET) frames, Ethernet frames, etc. The MPLS core 502 does not support or run RSTP.

Bridges B-F are configured as an RSTP loop 506 representing an example of an RSTP network. RSTP may be running on the bridges B-F. The RSTP may prevent a Layer 2 topological loop and may provide redundant paths through the RSTP loop. On start up, all of the bridges may exchange RSTP BPDUs. After RSTP has converged, the bridge with the best priority vector may be determined as the root bridge. In the illustrated example embodiment, bridge B 504-B has been determined as the root bridge. According to RSTP, the states of the ports are decided in such a way that there are no loops in the topology and the least cost path to the root bridge (bridge B 504-B) is not blocking. In the illustration, port states are shown as a designated port (DP) which is a forwarding port, a root port (RP) which is a forwarding port, and alternate port (ALT) which is a discarding port. A primary path 534 is shown connecting bridges B, D, and F through ports 15, 11, 8, 7, and 3. An alternate path (not shown) is also determined which would connect bridges C, E, and F, but is presently not used to transmit traffic to avoid loops in the topology.

Bridge B is an RSTP edge bridge disposed at an edge of the RSTP loop 506 between the RSTP loop 506 and an MPLS core 502. Likewise, bridge C is such an RSTP edge bridge. Each of bridges B and C are operable to support and run RSTP. Bridge B includes an RSTP module 570, representing an example of a link management protocol module. However, RSTP does not run and is not supported in the MPLS core 502. Moreover, port 1 of bridge B and port 4 of bridge C are not RSTP ports and do not run or support RSTP. Bridge B also includes a traffic direction system 518 in communication with the RSTP module. In one embodiment, each of bridges B and C may be a SmartEdge brand multi-service edge router platform (e.g., SM480 Metro Ethernet Service Transport network element), available from Ericsson of Stockholm, Sweden.

Network traffic 508 may be received by the RSTP loop 506 (e.g., through port 15 of bridge F). The received network traffic 508 may be forwarded to port 3 of bridge B along the primary path 534. The network traffic 508 may be transmitted from port 1 of bridge B to port 13 of bridge A. In one example implementation, the illustrated RSTP loop 506 may provide a customer edge Layer 2 virtual private network (VPN). Each of the bridges D, E, and F may be customer edge equipment providing access to provider edge bridges A, B, and C. End stations (not shown) may access the RSTP loop 506 to connect to the MPLS core 502, and via the MPLS core to other end stations (not shown) across the Internet. By way of example, the end stations may be subscriber end stations or server end stations. Subscriber or computer end stations (e.g., servers, workstations, laptops, netbooks, palm tops, mobile phones, smartphones, multimedia phones, Voice Over Internet Protocol (VoIP) phones, user equipment, terminals, portable media players, Global Positioning System (GPS) units, gaming systems, settop boxes) access content/services provided over the Internet and/or content/services provided on virtual private networks (VPNs) overlaid on (e.g., tunneled through) the Internet. The content and/or services are typically provided by one or more end stations (e.g., server end stations) belonging to a service or content provider or end stations participating in a peer to peer service, and may include, for example, public webpages (e.g., free content, store fronts, search services), private webpages (e.g., username/password accessed webpages providing email services), and/or corporate networks over VPNs.

Referring again to **FIG. 4****,** a determination is made that the port is unavailable, at block 427. Different ways are contemplated for the network element to determine that the port is unavailable. In one embodiment, the network element may include a traffic direction system that may directly monitor a status of the port. In another embodiment, the network element may include a traffic direction system that may indirectly monitor or learn of a status of the port via another entity (e.g., a conventional RSTP machine designed to monitor the status of the port).

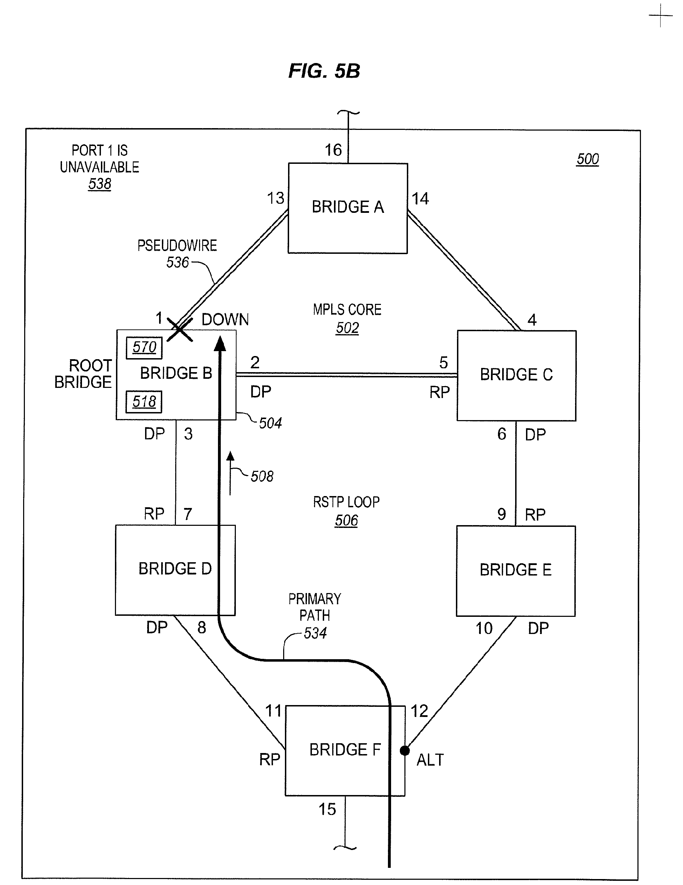

**FIG. 5B** is a block diagram illustrating a subsequent state 538 where port 1 is unavailable. As one example, port 1 may become unavailable if bridge B goes down (e.g., due to a power failure). As another example, port 1 may be come unavailable due to port 1 failing (e.g., a failure of a line card) or port 1 being manually taken out of service by an administrator, etc. As yet another example, port 1 may become unavailable if a cable or other link connected to port 1 becomes unavailable.

Referring again to **FIG. 4****,** a first message is transmitted to the first network, after determining that the port is unavailable, at block 428. The first message includes an unfavorable priority value for the network element. The unfavorable priority value is operable to cause the primary path to move away from the network element. For example, the network element may transmit an RSTP BPDU and/or spanning tree priority vector having a bridge identifier field that includes an increased priority value that has been increased in magnitude relative to an immediately prior priority value (e.g., the most recently transmitted priority value that was transmitted a few seconds prior). By way of example, RSTP prescribes that the bridge priority is an unsigned integer with a value ranging from of 0 to 65,535. In various embodiments, the unfavorable priority for bridge B in an RSTP implementation may be greater than 30,000, greater than 40,000, greater than 50,000, or greater than 60,000 (e.g., 65,535). Accordingly, in some embodiments, the priority of the bridge may be altered or changed based on a state or status of a port of the bridge. For example, when the port is unavailable, the priority may be reduced and/or the spanning tree priority vector for the bridge made inferior so that the bridge will not be a part of the primary path.

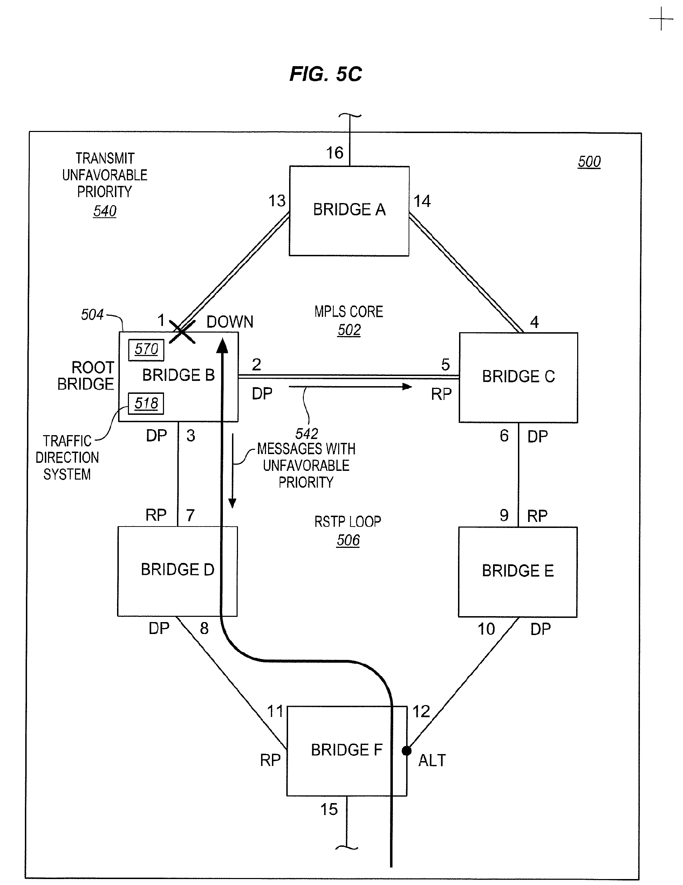

**FIG. 5C** is a block diagram illustrating a subsequent state 540 where bridge B transmits messages with unfavorable priority 542 to the RSTP loop 506. The traffic direction system 518 of bridge B is operable to determine to direct network traffic away from bridge B, while port 1 of bridge B is down and bridge B is not operable to forward received network traffic to the bridge A. In one embodiment, the transmitted messages may each include an RSTP BPDU having a bridge identifier field that includes an increased priority value, where the increased priority value is increased relative to an immediately prior priority value (e.g., the most recently transmitted priority value that was transmitted a few seconds prior). As shown, the traffic direction system 518 may cause bridge B to transmit a message with the unfavorable priority for bridge B out of port 2 to bridge C, and to transmit a message with the unfavorable priority for bridge B out of port 3 to bridge D. In one embodiment, the messages are sent immediately or very soon after determining that the port 1 is unavailable and/or before a next scheduled, regular, or predetermined message transmit time.

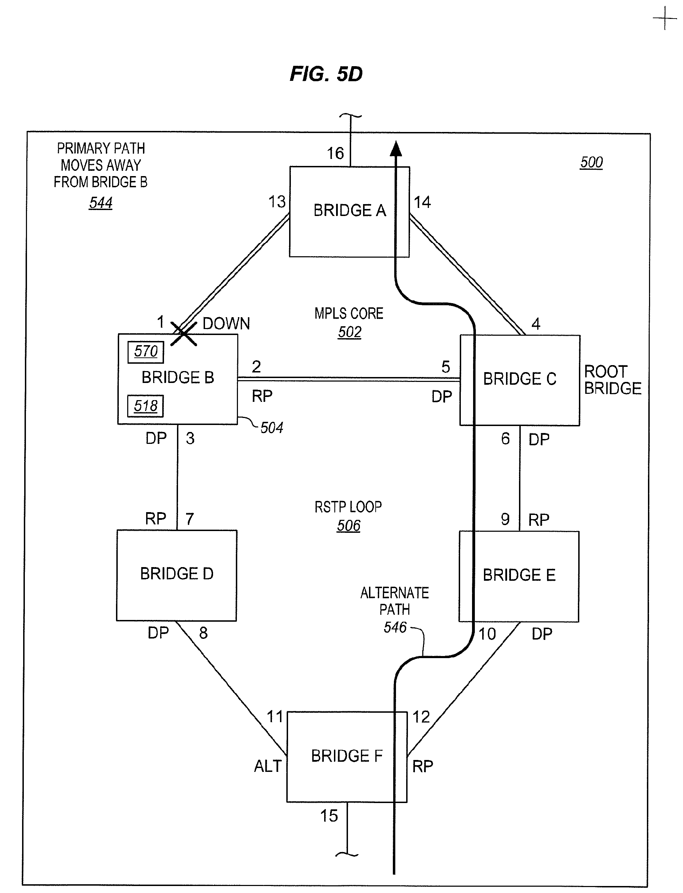

**FIG. 5D** is a block diagram illustrating a subsequent state 544 after the primary path 534 has moved away from bridge B and an alternate path 546 has been configured. After bridge B transmitted the RSTP BPDUs with the unfavorable priority values, RSTP may re-converge and the bridges in the RSTP loop 506 may determine a new root bridge, which in the illustrated embodiment is bridge C, based at least in part on the recently changed priority value transmitted by bridge B. The bridges in the RSTP loop also determine new port states based at least in part on the recently changed priority value transmitted by bridge B. In the illustrated state, the traffic flows from bridge F to bridge A through the alternate path 546 connecting bridges F, E, and C.

Referring again to **FIG. 4****,** a determination is made that the port is available, after transmitting the message, at block 429. As previously mentioned, different ways are contemplated for the network element to determine that the port is available. In one embodiment, the network element may include a traffic direction system that is operable to directly monitor a status of the port. In another embodiment, the network element may include a traffic direction system that is operable to indirectly monitor or learn of a status of the port via another entity (e.g., a conventional RSTP machine designed to monitor the status of the port).

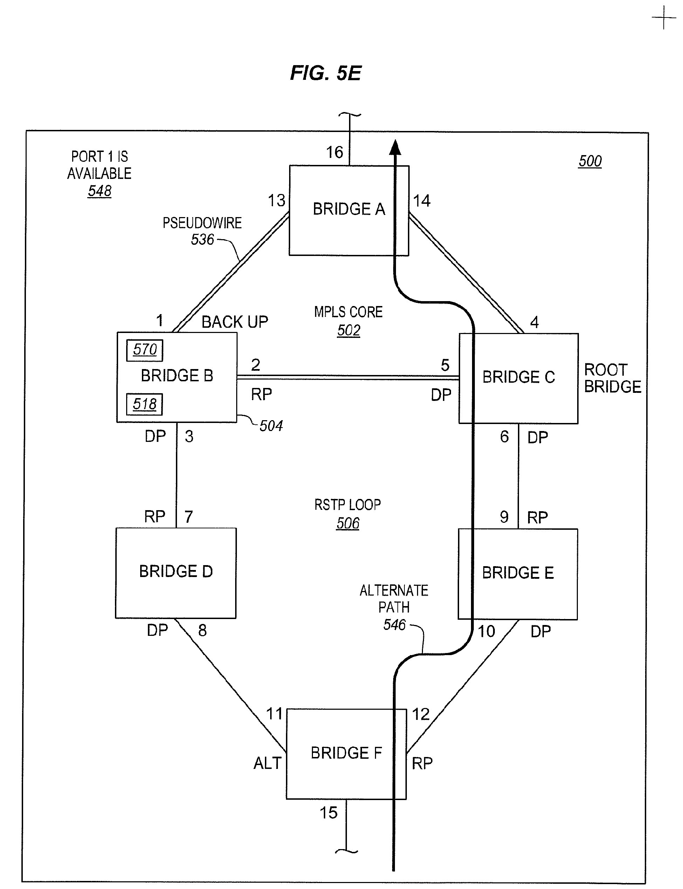

**FIG. 5E** is a block diagram illustrating a subsequent state 548 where port 1 of bridge B is available again. Once port 1 is available, it is capable of transmitting network traffic received by bridge B to bridge A. However, the network traffic presently still flows through alternate path 546.

Referring again to **FIG. 4****,** a second message is transmitted to the first network, after determining that the port is available, at block 430. Commonly the second message is transmitted relatively soon after determining that the port is available. The second message includes a favorable priority value for the network element. For example, in one embodiment, the network element may transmit a BPDU and/or spanning tree priority vector having a bridge identifier field that includes a decreased (smaller magnitude) priority value that has been decreased in magnitude relative to an immediately prior priority value (e.g., the most recently transmitted priority value that was transmitted a few seconds prior and/or the priority value transmitted at block 428). Recall that in STP, RSTP, and certain other spanning tree protocols, the smaller the magnitude of the priority value, the better the priority (i.e., the more likely the port will be determined to be the root bridge). The favorable priority value is operable to cause the primary path to return to the network element. For example, the priority value may be smaller in magnitude than a corresponding priority of the present root bridge so that bridge B may essentially announce "I am root". RSTP prescribes that the bridge priority is an unsigned integer with a value ranging from of 0 to 65,535. In one embodiment, the favorable priority for bridge B in an RSTP implementation may be zero.

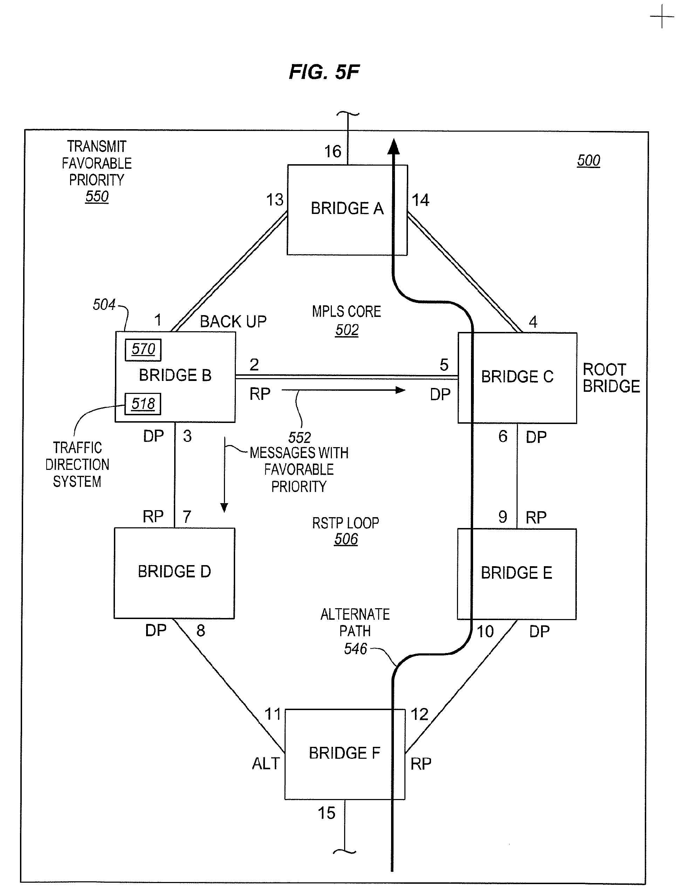

**FIG. 5F** is a block diagram illustrating a subsequent state 550 where bridge B transmits messages with favorable priority 552 to the RSTP loop 506. The traffic direction system 518 of bridge B is operable to determine to direct or cause network traffic to return to bridge B, after port 1 of bridge B is available and/or bridge B is otherwise operable to forward network traffic to bridge A. By way of example, the traffic direction system 518 may check the status of port 1, or communicate with another entity to determine the status of port 1, to ensure that port 1 is available before transmitting the messages with the favorable priority effectively announcing "I am root". As shown, the traffic direction system 518 may cause bridge B to transmit one message with the favorable priority for bridge B out of port 2 to bridge C, and to transmit another message with the favorable priority for bridge B out of port 3 to bridge D.

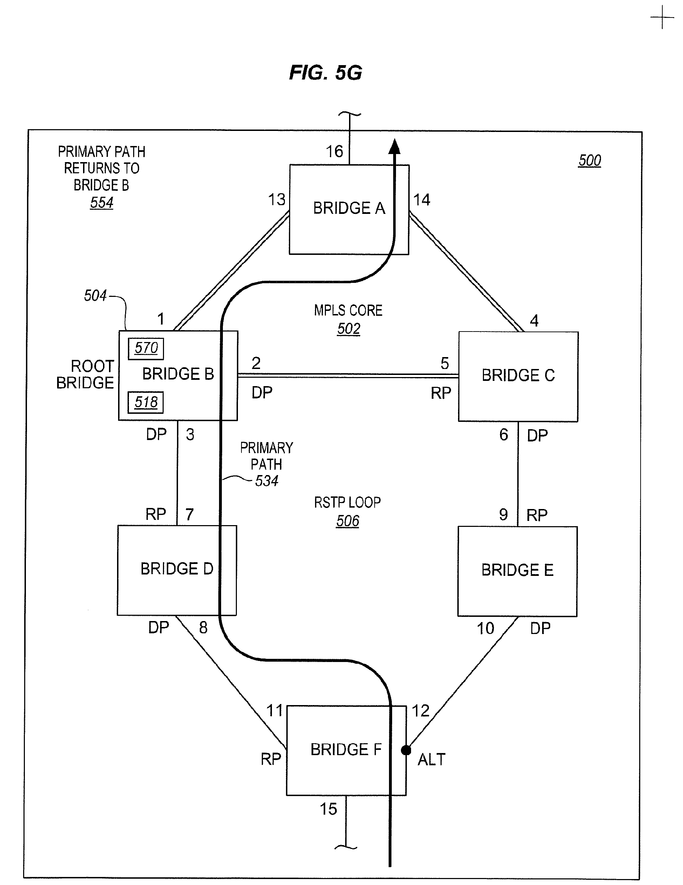

**FIG. 5G** is a block diagram illustrating a subsequent state 554 where the primary path 534 returns to bridge B. After the favorable priority value has been transmitted, RSTP will re-converge based on the favorable priority value, the best path will be chosen, and bridge B will again be determined to be root bridge. The resulting state 554 may be substantially similar to the initial state 532 in **FIG. 5A**. Network traffic will now be forwarded to bridge B over the primary path 534. Since port 1 of bridge B is available, the received network traffic will be forwarded to bridge A without the aforementioned problematic traffic loss that may occur when traffic is received at a time when port 1 is down or bridge B is otherwise not able to forward the traffic.

Advantageously, **FIGs. 5A-5G** illustrate an example embodiment of an RSTP priority inversion method that may help to reduce traffic loss within bridge B. The traffic direction system of bridge B is operable to direct or divert network traffic away from bridge B at times when port 1 is unavailable and/or when bridge B is otherwise unable to forward network traffic to bridge A. As a result, the network traffic is not sent to bridge B and does not get "black holed" or otherwise lost within bridge B during these periods of time. Then, when the port 1 subsequently becomes available again and/or when bridge B is again able to forward network traffic to bridge A, the traffic direction system of bridge B is operable to direct or cause network traffic to come back into bridge B.

It is to be appreciated that availability of a port is just one illustrative example of a reason for determining to perform priority inversion, transmit an unfavorable priority value, or otherwise direct traffic away from bridge or other Layer 2 data forwarding network element. A few representative examples of other reasons that are also contemplated include, but are not limited to: (a) a load on the network element is above a threshold; (b) a card, processor, core, or other portion of a network element has a load above a threshold; (c) there is some other internal data forwarding bottleneck in the network element; (d) a determination to change or upgrade software on the network element; (e) a determination to reconfigure the network element; and (f) a determination to shutdown the network element.

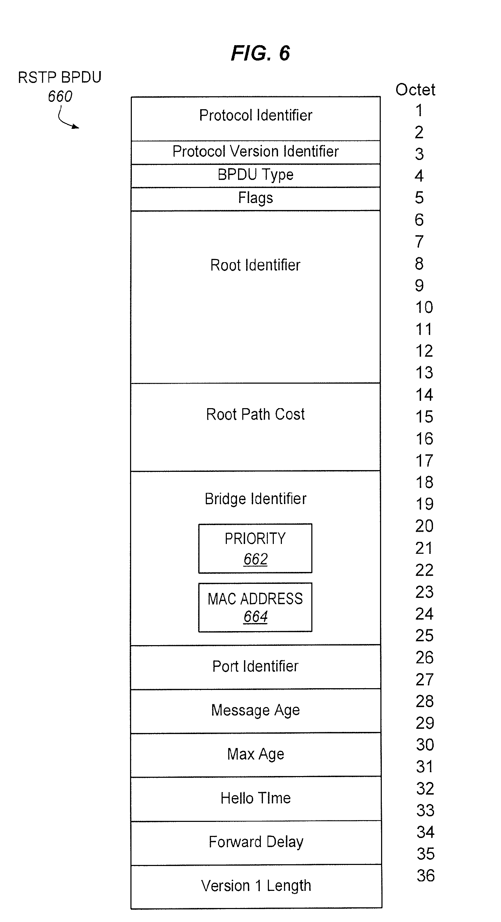

**FIG. 6** illustrates a block diagram of a conventional RSTP BPDU. The RSTP BPDU includes a plurality of conventional fields of conventional sizes, which are shown in octets (bytes) to the right hand side of the illustration. The fields include a protocol identifier, a protocol version identifier, a BPDU type, flags, a root identifier, a root path cost, a bridge identifier, a port identifier, a message age, a max age, a hello time, a forward delay, and a version 1 length. The bridge identifier, bride ID, or BID field is eight octets or bytes in length. The first two bytes are a bridge priority 662. RSTP prescribes that the bridge priority is an unsigned integer ranging from 0 to 65,535. In embodiments of the invention, these two bytes of the bridge identifier, bride ID, or BID field may be changed as described elsewhere herein to direct traffic away from or into a network element. For example the bridge priority may be made low (e.g., zero) to cause traffic to come into the network element or high (e.g., 65,535) to cause traffic to be diverted away from the network element. The six other bytes of the bridge identifier field are a MAC address 664 for the bridge.

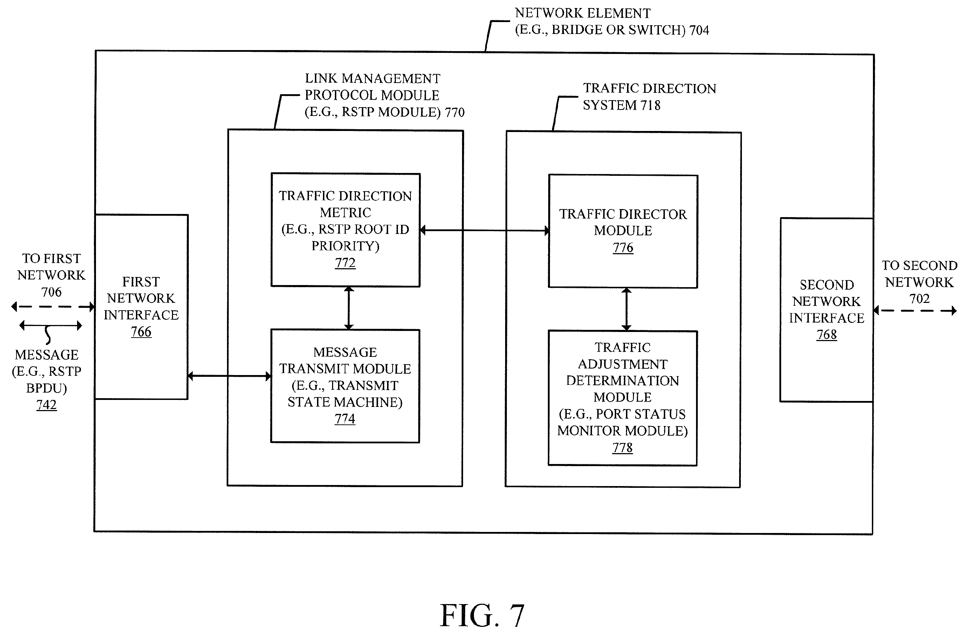

**FIG. 7** is a block diagram illustrating an example embodiment of a network element 704 operable to perform layer 2 data forwarding. In some embodiments, the network element 704 may be a bridge or switch. In other embodiments, the network element 704 may not necessarily be a bridge or switch but may be operable to perform bridging, switching, or other Layer 2 data forwarding. In one particular example embodiment, the network element 704 is a SmartEdge brand multi-service edge router platform (e.g., SM480 Metro Ethernet Service Transport network element), available from Ericsson of Stockholm, Sweden.

In some embodiments, the network element 704 may be configured to be deployed at an edge of a first network (e.g., an RSTP network (e.g., RSTP network 106), an STP network, a PVST network, a R-PVST network, a MSTP network, networks based on future versions or replacements for these protocols, other spanning tree protocol networks, etc.). The network element may be disposed at the edge of the first network between the first network and a second network (e.g., a non-RSTP network (e.g., non-RSTP network 102), an MPLS network, a Layer 2.5 network, another label switched network, another core network, etc.). For example, the network element 204 may be configured to be an edge bridge (e.g., RSTP edge bridge 104). The first network may be operable to support a link management protocol (e.g., STP, RSTP, PVST, R-PVST, MSTP, future versions of these protocols, replacements for these protocols, or another spanning tree protocol) that is operable to provide redundant paths through the first network and operable to avoid layer 2 loops in the first network. The second network may not support the same link management protocol.

In some embodiments, the network element 704 may perform methods as disclosed elsewhere herein (e.g., method 320 or method 420). However, in other embodiments the network element 704 may perform entirely different methods. Moreover, the methods disclosed herein (e.g., method 320 or method 420) may be performed by network elements entirely different than the illustrated network element 704.

Referring to **FIG. 7****,** the network element includes a first network interface 766 to a first network 706. The network element includes a second network interface 768 to a second network 702. The network element may include one or more control cards (not shown) and one or more line cards (not shown). Moreover, the network element 704 may have other attributes of network elements disclosed elsewhere herein (e.g., network element 204). For brevity, these details are not repeated.

The network element includes a link management protocol module 770. The link management protocol module is operable to support the link management protocol that is operable to provide the redundant paths through the first network and operable to avoid the layer 2 loops in the first network. In various embodiments, the link management protocol module may be an STP, RSTP, PVST, R-PVST, or MSTP module. In some embodiments, the STP, RSTP, PVST, R-PVST, or MSTP module may be a conventional or substantially conventional module. As shown, the link management protocol module 770 may include a traffic direction metric (e.g., an RSTP or other spanning tree protocol bridge priority) 772. The link management protocol module 770 may also include a message transmit module (e.g., a transmit state machine) 774.

The network element includes a traffic direction system 718 in communication with the link management protocol module 770. The traffic direction system 718 is operable to divert, influence, or otherwise direct traffic into and/or away from the network element 704. The traffic direction system includes a traffic director module 776 and a traffic adjustment determination module 778 in communication with the traffic director module 776. The traffic adjustment determination module 778 is operable to determine to direct network traffic away from the network element, while the network element is not operable to forward the network traffic to the second network (e.g., when a port is unavailable or according to various other criteria disclosed herein). In one aspect, the traffic adjustment determination module 778 may be a port status monitor module or may communicate with another entity that monitors a status of a port. The traffic director module 776 is operable, when instructed by the traffic adjustment determination module 778, to direct the network traffic away from the network element. As shown, the traffic director module 776 is in communication with the traffic direction metric 772 and may change the traffic direction metric 772 in conjunction with directing the traffic. The message transmit module 774 may transmit a message (e.g., a BPDU) with the adjusted traffic direction metric to direct the traffic. The traffic adjustment determination module 778 is operable to determine to cause further network traffic to come into the network element after the network element is operable to forward the further network traffic to the second network (e.g., when a port is available again or according to various other criteria disclosed herein). The traffic director module 776 is operable, when instructed by the traffic adjustment determination module 778, to direct or cause the further network traffic to come into the network element.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

While the flow diagrams in the figures show a particular order of operations performed by certain embodiments of the methods, it should be understood that such order is exemplary. Alternative embodiments may potentially perform the operations in a different order, combine certain operations, overlap certain operations, etc. In addition, one or more operations may optionally be removed from the methods or one or more operations may optionally be added to the methods.

The techniques shown in the figures can be implemented using code and data stored and executed on one or more electronic devices (e.g., an end station, a network element). Such electronic devices store and communicate (internally and/or with other electronic devices over a network) code and data using computer-readable media, such as non-transitory computer -readable storage media (e.g., magnetic disks; optical disks; random access memory; read only memory; flash memory devices; phase-change memory) and transitory computer -readable communication media (e.g., electrical, optical, acoustical or other form of propagated signals - such as carrier waves, infrared signals, digital signals). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). Thus, the storage device of a given electronic device typically stores code and/or data for execution on the set of one or more processors of that electronic device. Of course, one or more parts of an embodiment of the invention may be implemented using different combinations of software, firmware, and/or hardware.

## Claims

1. A method (320) performed in a Layer 2 data forwarding network element (204, 704), which is deployed at an edge of a first network (706) between the first network (706) and a second network (702), the first network (706) supporting a link management protocol that is operable to provide redundant paths through the first network (706) and operable to avoid layer 2 loops in the first network (706), the second network (702) not supporting the link management protocol, the method (320) for reducing network traffic loss by the Layer 2 data forwarding network element, the method (320) comprising the steps of:
determining (321) to direct network traffic away from the Layer 2 data forwarding network element (204, 704) while the Layer 2 data forwarding network element (204, 704) is not operable to forward the network traffic to the second network (702);
directing (322) the network traffic away from the Layer 2 data forwarding network element (204, 704) responsive to the step of determining (321) to direct the network traffic away from the Layer 2 data forwarding network element (204, 704);
determining (323) to cause further network traffic to come into the Layer 2 data forwarding network element (204, 704) after the Layer 2 data forwarding network element (204, 704) is operable to forward the further network traffic to the second network (702); and
causing (324) the further network traffic to come into the Layer 2 data forwarding network element (204, 704) responsive to determining to cause the further network traffic to come into the Layer 2 data forwarding network element (204, 704), wherein:
the step of determining (321) to direct the network traffic away from the network element (204, 704) comprises determining that a port of the network element (204, 704) is unavailable; and
the step of determining (323) to cause the further network traffic to come into the network element (204, 704) comprises determining to cause the further network traffic to come into the network element after the port is available,
the step of directing (322) the network traffic away from the Layer 2 data forwarding network element (204, 704) comprises transmitting a first message to the first network (706), the first message including an unfavorable priority value for the Layer 2 data forwarding network element (204, 704), wherein the unfavorable priority value is operable to cause a primary path and root node to move away from the Layer 2 data forwarding network element (204, 704); and
the step of causing (324) the further network traffic to come into the Layer 2 data forwarding network element (204, 704) comprises transmitting a second message to the first network (706), the second message including a favorable priority value for the Layer 2 data forwarding network element (204, 704), wherein the favorable priority value is operable to cause the primary path and root node to return to the Layer 2 data forwarding network element (204, 704),
wherein the link management protocol comprises a rapid spanning tree protocol, RSTP, and wherein the step of directing (322) the network traffic away from the Layer 2 data forwarding network element (204, 704) comprises transmitting an RSTP bridge protocol data unit, BPDU, to the first network (706), the RSTP BPDU having a bridge identifier field that includes an increased priority value, wherein the increased priority value is increased relative to an immediately prior priority value.

2. The method (320) of claim 1, wherein the step of determining that the port of the network element is unavailable comprises determining that a port that is configured to forward data from the Layer 2 data forwarding network element (204, 704) to the second network is unavailable, and wherein the port comprises a pseudowire.

3. The method (320) of claim 1, wherein:
the step of directing (322) the network traffic away from the Layer 2 data forwarding network element (204, 704) comprises causing a primary path to move away from the Layer 2 data forwarding network element (204, 704); and
the step of causing (324) the further network traffic to come into the Layer 2 data forwarding network element (204, 704) comprises causing the primary path to return to the Layer 2 data forwarding network element (204, 704).

4. The method (320) of claim 1, wherein the step of determining (321) to direct the network traffic away from the network element comprises determining one of: that a port of the network element (204, 704) is unavailable; to perform a software change on the network element (204, 704); to perform a configuration change on the network element (204, 704); or that a processing load on the network element (204, 704) is excessive.

5. The method of any of claims 1 to 4 wherein the link management protocol comprises a spanning tree protocol, that provides a primary path and an alternative path through the first network (706), the second network (702) not supporting the spanning tree protocol.

6. A network element (204, 704) that is operable to perform Layer 2 data forwarding, the network element (204, 704) configured to be deployed at an edge of a first network (706) between the first network (706) and a second network (702), the first network (706) operable to support a link management protocol that is operable to provide redundant paths through the first network (706) and operable to avoid layer 2 loops in the first network (706), the second network (702) not to support the link management protocol, the network element (204, 704) configured to reduce network traffic loss, the network element (204, 704) comprising:
one or more control cards (214-1) coupled together;
one or more line cards (216-1) coupled with the one or more control cards (214-1) and coupled together, the one or more line cards (216-1) operable to provide a first interface (766) to the first network (706) and operable to provide a second interface (768) to the second network (702);
a link management protocol module (270, 770) that is operable to support the link management protocol that is operable to provide the redundant paths through the first network (706) and operable to avoid the layer 2 loops in the first network (706);
a traffic director system (218, 718) in communication with the link management protocol module (270, 770), the traffic director system (218, 718) including a traffic adjustment determination module (778) and a traffic director module (776) in communication with the traffic adjustment determination module (778),
the traffic adjustment determination module (778) operable to determine to direct network traffic away from the network element (204, 704), while the network element (204, 704) is not operable to forward the network traffic to the second network (702),
the traffic director module (776) operable, when instructed by the traffic adjustment determination module (778), to direct the network traffic away from the network element (204, 704),
the traffic adjustment determination module (778) operable to determine to cause further network traffic to come into the network element (204, 704) after the network element (204, 704) is operable to forward the further network traffic to the second network (702), and
the traffic director module (776) operable, when instructed by the traffic adjustment determination module (778), to cause the further network traffic to come into the network element (204, 704), wherein:
the traffic adjustment determination module (778) is operable to determine to direct the network traffic away from the network element (204, 704) after determining that a port of the network element (204, 704) is unavailable;
the traffic adjustment determination module (778) is operable to determine to cause the further network traffic to come into the network element (204, 704) after determining that the port is available;
the traffic director module (776) is further operable to direct the network traffic away from the network element (204, 704) by causing the link management protocol module (270, 770) to transmit a message to the first network (706) that includes an unfavorable priority value, wherein the unfavorable priority value is operable to cause a primary path and root node to move away from the network element (204, 704);
the traffic director module (776) is further operable to cause the further network traffic to come into the network element (204, 704) by causing the link management protocol module (270, 770) to transmit a message to the first network (706) that includes a favorable priority value, wherein the favorable priority value is operable to cause the primary path and root node to return to the network element (204, 704);
the link management protocol module (270, 770) comprises a rapid spanning tree protocol, RSTP, module; and
the traffic director module (776) is further operable, when directing the network traffic away from the Layer 2 data forwarding network element (204, 704), to transmit an RSTP bridge protocol data unit, BPDU, to the first network (706), the RSTP BPDU having a bridge identifier field that includes an increased priority value, wherein the increased priority value is increased relative to an immediately prior priority value.

7. The network element (204, 704) of claim 6, wherein the port is configured to forward data from the network element (204, 704) to the second network (702) over a pseudowire.

8. The network element (204, 704) of claim 6, wherein the second network (702) is operable to support multiprotocol label switching, MPLS.

9. The network element (204, 704) of claim 6, wherein:
the traffic director module (776) is operable to direct the network traffic away from the network element (204, 704) by causing a primary path to move away from the network element (204, 704); and
the traffic director module (776) is operable to causing the further network traffic to come into the network element (204, 704) by causing the primary path to return to the network element (204, 704).

10. The network element (204, 704) of claim 6, wherein the traffic adjustment determination module (778) is operable to determine to direct the network traffic away from the network element (204, 704) by determining one of: that a port of the network element (204, 704) is unavailable; that a software change is to be performed on the network element (204, 704); that a configuration change is to be performed on the network element (204, 704); or that a processing load on the network element (204, 704) is excessive.

## Patentansprüche

1. Ein Verfahren (320), ausgeführt in einem Schicht-2-Datenweiterleitungs-Netzwerkelement (204, 704), welches am Rand eines ersten Netzwerks (706) zwischen dem ersten Netzwerk (706) und einem zweiten Netzwerk (702) eingesetzt ist, wobei das erste Netzwerk (706) ein Verbindungsverwaltungsprotokoll unterstützt, welches zum Bereitstellen von redundanten Pfaden durch das erste Netzwerk (706) betreibbar ist und zum Vermeiden von Schicht-2-Schleifen in dem ersten Netzwerk (706) betreibbar ist, wobei das zweite Netzwerk (702) das Verbindungsverwaltungsprotokoll nicht unterstützt, das Verfahren (320) zum Vermindern eines Netzwerkverkehrsverlusts durch das Schicht-2-Datenweiterleitungs-Netzwerkelement, wobei das Verfahren (320) die Schritte umfasst:
Bestimmen (321), Netzwerkverkehr von dem Schicht-2-Datenweiterleitungs-Netzwerkelement (204, 704) wegzuleiten, während das Schicht-2-Datenweiterleitungs-Netzwerkelement (204, 704) nicht zum Weiterleiten des Netzwerkverkehrs an das zweite Netzwerk (702) betreibbar ist;
Wegleiten (322) des Netzwerkverkehrs von dem Schicht-2-Datenweiterleitungs-Netzwerkelement (204, 704) in Reaktion auf den Bestimmungsschritt (321) zum Wegleiten des Netzwerkverkehrs von dem Schicht-2-Datenweiterleitungs-Netzwerkelement (204, 704);
Bestimmen (323) zu Veranlassen, dass weiterer Netzwerkverkehr in das Schicht-2-Datenweiterleitungs-Netzwerkelement (204, 704) kommt, nachdem das Schicht-2-Datenweiterleitungs-Netzwerkelement (204, 704) zum Weiterleiten des weiteren Netzwerkverkehrs an das zweite Netzwerk (702) betreibbar ist; und
Veranlassen (324), dass weiterer Netzwerkverkehr in das Schicht-2-Datenweiterleitungs-Netzwerkelement (204, 704) kommt, in Reaktion auf die Bestimmung zu veranlassen, dass weiterer Netzwerkverkehr in das Schicht-2-Datenweiterleitungs-Netzwerkelement (204, 704) kommt, wobei:
der Schritt (321) zum Bestimmen zu Wegleiten des Netzwerkverkehrs von dem Netzwerkelement (204, 704) ein Bestimmen umfasst, dass ein Anschluss des Netzwerkelements (204, 704) nicht verfügbar ist; und
der Schritt (323) zum Bestimmen zu Veranlassen, dass der weitere Netzwerkverkehr in das Netzwerkelement (204, 704) kommt, ein Bestimmen zu veranlassen, dass der weitere Netzwerkverkehr in das Netzwerkelement kommt, nachdem der Anschluss verfügbar ist, umfasst,
der Schritt (322) zum Wegleiten des Netzwerkverkehrs von dem Schicht-2-Datenweiterleitungs-Netzwerkelement (204, 704) ein Übertragen einer ersten Nachricht an das erste Netzwerk (706) umfasst, wobei die erste Nachricht einen ungünstigen Prioritätswert für das Schicht-2-Datenweiterleitungs-Netzwerkelement (204, 704) umfasst, wobei der ungünstige Prioritätswert betreibbar ist, zu veranlassen einen Primärpfad und einen Ursprungsknoten von dem Schicht-2-Datenweiterleitungs-Netzwerkelement (204, 704) abzuziehen; und
der Schritt (324) zum Veranlassen, dass der weitere Netzwerkverkehr in das Schicht-2-Datenweiterleitungs-Netzwerkelement (204, 704) kommt, ein Übertragen einer zweiten Nachricht an das erste Netzwerk (706) umfasst, wobei die zweite Nachricht einen günstigen Prioritätswert für das Schicht-2-Datenweiterleitungs-Netzwerkelement (204, 704) umfasst, wobei der günstige Prioritätswert betreibbar ist, zu veranlassen den Primärpfad und den Ursprungsknoten zu dem Schicht-2-Datenweiterleitungs-Netzwerkelement (204, 704) zurückzuziehen,
wobei das Verbindungsverwaltungsprotokoll ein Rapid-Spanning-Tree-Protocol, RSTP, umfasst und wobei der Wegleitungsschritt (322) des Netzwerkverkehrs von dem Schicht-2-Datenweiterleitungs-Netzwerkelement (204, 704) ein Übertragen einer RSTP-Brückenprotokoll-Dateneinheit, BPDU, an das erste Netzwerk (706) umfasst, wobei die RSTP BPDU ein Brückenidentifikationsfeld aufweist, welches einen erhöhten Prioritätswert umfasst, wobei der erhöhte Prioritätswert relativ zu einem unmittelbar vorhergehenden Prioritätswert erhöht ist.

2. Verfahren (320) gemäß Anspruch 1, wobei der Bestimmungsschritt, dass der Anschluss des Netzwerkelements nicht verfügbar ist, ein Bestimmen umfasst, dass ein Anschluss, welcher zum Weiterleiten von Daten von dem Schicht-2-Datenweiterleitungs-Netzwerkelement (204, 704) an das zweite Netzwerk ausgebildet ist, nicht verfügbar ist, und wobei der Anschluss eine Pseudo-Leitung umfasst.

3. Verfahren (320) gemäß Anspruch 1, wobei:
der Schritt (322) zum Wegleiten des Netzwerkverkehrs von dem Schicht-2-Datenweiterleitungs-Netzwerkelement (204, 704) ein Veranlassen, einen Primärpfad von dem Schicht-2-Datenweiterleitungs-Netzwerkelement (204, 704) wegzuziehen, umfasst; und
der Schritt (324) zum Veranlassen, dass der weitere Netzwerkverkehr in das Schicht-2-Datenweiterleitungs-Netzwerkelement (204, 704) kommt, ein Veranlassen den Primärpfad zu dem Schicht-2-Datenweiterleitungs-Netzwerkelement (204, 704) zurückzuziehen umfasst.

4. Verfahren (320) gemäß Anspruch 1, wobei der Bestimmungsschritt (321) zum Wegleiten des Netzwerkverkehrs von dem Netzwerkelement ein Bestimmen umfasst von: dass ein Anschluss des Netzwerkelements (204, 704) nicht verfügbar ist; oder zum Ausführen einer Softwareänderung auf dem Netzwerkelement (204, 704); oder zum Ausführen einer Konfigurationsänderung des Netzwerkelements (204, 704); oder dass eine Prozesslast auf dem Netzwerkelement (204, 704) übermäßig ist.

5. Verfahren gemäß einem der Ansprüche 1 bis 4, wobei das Verbindungsverwaltungsprotokoll ein Spanning-Tree-Protokoll umfasst, welches einen Primärpfad und einen Alternativpfad durch das erste Netzwerk (706) bereitstellt, wobei das zweite Netzwerk (702) das Spanning-Tree-Protokoll nicht unterstützt.

6. Ein Netzwerkelement (204, 704), welches zum Ausführen einer Schicht-2-Datenweiterleitung betreibbar ist, wobei das Netzwerkelement (204, 704) ausgebildet ist, an einem Rand eines ersten Netzwerks (706) zwischen dem ersten Netzwerk (706) und einem zweiten Netzwerk (702) verwendet zu werden, wobei das erste Netzwerk (706) zum Unterstützen eines Verbindungsverwaltungsprotokolls betreibbar ist, welches zum Bereitstellen von redundanten Pfaden durch das erste Netzwerk (706) betreibbar ist, und zum Vermeiden von Schicht-2-Schleifen in dem ersten Netzwerk (706) betreibbar ist, wobei das zweite Netzwerk (702) das Verbindungsverwaltungsprotokoll nicht unterstützt, wobei das Netzwerkelement (204, 704) zum Vermindern eines Netzwerkverkehrsverlusts ausgebildet ist, wobei das Netzwerkelement (204, 704) umfasst:
eine oder mehrere zusammengekoppelte Steuerkarten (214-1) ;
eine oder mehrere Linekarten (216-1), welche mit der einen oder den mehreren Steuerkarten (214-1) gekoppelt und zusammen gekoppelt sind, wobei die eine oder mehreren Linekarten (216-1) zum Bereitstellen einer ersten Schnittstelle (766) für das erste Netzwerk (706) betreibbar ist und zum Bereitstellen einer zweiten Schnittstelle (768) an das zweite Netzwerk (702) betreibbar ist;
ein Verbindungsverwaltungsprotokoll-Modul (270, 770), welches zum Unterstützen des Verbindungsverwaltungsprotokolls betreibbar ist, welches zum Bereitstellen der redundanten Pfade durch das erste Netzwerk (706) betreibbar ist und zum Vermeiden der Schicht-2-Schleifen in dem ersten Netzwerk (706) betreibbar ist;
ein Verkehrsleitersystem (218, 718) in Kommunikation mit dem Verbindungsverwaltungsprotokoll-Modul (270, 770), wobei das Verkehrsleitersystem (218, 718) ein Verkehrseinstellungsbestimmungsmodul (778) und ein Verkehrsleitermodul (776) in Kommunikation mit dem Verkehrseinstellungsbestimmungsmodul (778) umfasst,
wobei das Verkehrseinstellungsbestimmungsmodul (778) betreibbar ist, zu bestimmen, dass ein Netzwerkverkehr von dem Netzwerkelement (204, 704) weggeleitet wird, während das Netzwerkelement (204, 704) zum Weiterleiten des Netzwerkverkehrs an das zweite Netzwerk (702) nicht betreibbar ist,
das Verkehrsleitermodul (776) betreibbar ist, wenn durch das Verkehrseinstellungsbestimmungsmodul (778) angewiesen, den Netzwerkverkehr von dem Netzwerkelement (204, 704) wegzuleiten,
das Verkehrseinstellungsbestimmungsmodul (778), betreibbar ist, zu bestimmen, zu veranlassen, dass weiterer Netzwerkverkehr in das Netzwerkelement (204, 704) kommt, nachdem das Netzwerkelement (204, 704) zum Weiterleiten des weiteren Netzwerkverkehrs an das zweite Netzwerk (702) betreibbar ist, und
das Verkehrsleitermodul (776) betreibbar ist, wenn durch das Verkehrseinstellungsbestimmungsmodul (778) angewiesen, zu veranlassen, dass der weitere Netzwerkverkehr in das Netzwerkelement (204, 704) kommt, wobei:
das Verkehrseinstellungsbestimmungsmodul (778) betreibbar ist, zu bestimmen, den Netzwerkverkehr von dem Netzwerkelement (204, 704) wegzuleiten, nach dem Bestimmen, dass ein Anschluss des Netzwerkelements (204, 704) nicht verfügbar ist;
das Verkehrseinstellungsbestimmungsmodul (778) betreibbar ist, zu bestimmen, zu veranlassen, dass der weitere Netzwerkverkehr in das Netzwerkelement (204, 704) kommt, nach dem Bestimmen, dass der Anschluss verfügbar ist;
das Verkehrsleitermodul (776) weiter betreibbar ist, den Netzwerkverkehr von dem Netzwerkelement (204, 704) wegzuleiten, durch Veranlassen des Verbindungsverwaltungsprotokoll-Moduls (270, 770) eine Nachricht an das erste Netzwerk (706) zu übertragen, welche einen ungünstigen Prioritätswert umfasst, wobei der ungünstige Prioritätswert betreibbar ist, zu veranlassen einen Primärpfad und einen Ursprungsknoten von dem Netzwerkelement (204, 704) abzuziehen;
das Verkehrsleitermodul (776) weiter betreibbar ist, zu veranlassen, dass der weitere Netzwerkverkehr in das Netzwerkelement (204, 704) kommt, durch Veranlassen des Verbindungsverwaltungsprotokoll-Moduls (270, 770) eine Nachricht an das erste Netzwerk (706) zu übertragen, welche einen günstigen Prioritätswert umfasst, wobei der günstige Prioritätswert betreibbar ist, zu veranlassen den Primärpfad und den Ursprungsknoten zu dem Netzwerkelement (204, 704) zurückzuziehen;
das Verbindungsverwaltungsprotokoll-Modul (270, 770) ein Rapid-Spanning-Tree-Protocol, RSTP,-Modul umfasst; und
das Verkehrsleitermodul (776) weiter betreibbar ist, wenn der Netzwerkverkehr von dem Schicht-2-Datenweiterleitungs-Netzwerkelement (204, 704) weggeleitet wird, eine RSTP-Brückenprotokoll-Dateneinheit, BPDU, an das erste Netzwerk (706) zu übertragen, wobei die RSTP BPDU ein Brückenidentifikationsfeld aufweist, welches einen erhöhten Prioritätswert umfasst, wobei der erhöhte Prioritätswert relativ zu einem unmittelbar vorhergehenden Prioritätswert erhöht ist.

7. Netzwerkelement (204, 704) gemäß Anspruch 6, wobei der Anschluss zum Weiterleiten von Daten von dem Netzwerkelement (204, 704) an das zweite Netzwerk (702) über eine Pseudo-Leitung ausgebildet ist.

8. Netzwerkelement (204, 704) gemäß Anspruch 6, wobei das zweite Netzwerk (702) zum Unterstützen eines Multiprotokoll-Label-Switching, MPLS, betreibbar ist.

9. Netzwerkelement (204, 704) gemäß Anspruch 6, wobei:
das Verkehrsleitermodul (776) betreibbar ist, zum Wegleiten des Netzwerkverkehrs von dem Netzwerkelement (204, 704) durch Veranlassen einen Primärpfad von dem Netzwerkelement (204, 704) wegzuziehen; und
das Verkehrsleitermodul (776) betreibbar ist, zum Veranlassen, dass der weitere Netzwerkverkehr in das Netzwerkelement (204, 704) kommt, durch Veranlassen den Primärpfad zu dem Netzwerkelement (204, 704) zurückzuziehen.

10. Netzwerkelement (204, 704) gemäß Anspruch 6, wobei das Verkehrseinstellungsbestimmungsmodul (778) betreibbar ist, zum Bestimmen den Netzwerkverkehr von dem Netzwerkelement (204, 704) wegzuleiten, durch Bestimmen von: dass ein Anschluss des Netzwerkelements (204, 704) nicht verfügbar ist; oder dass eine Softwareänderung auf dem Netzwerkelement (204, 704) auszuführen ist; oder dass eine Konfigurationsänderung auf dem Netzwerkelement (204, 704) auszuführen ist; oder dass eine Verarbeitungslast auf dem Netzwerkelement (204, 704) übermäßig ist.

## Revendications

1. Procédé (320) mis en oeuvre dans un élément réseau d'acheminement de données de couche 2 (204, 704), qui est déployé au niveau d'une périphérie d'un premier réseau (706) entre le premier réseau (706) et un deuxième réseau (702), le premier réseau (706) supportant un protocole de gestion de liaison qui est en mesure de fournir des chemins redondants à travers le premier réseau (706) et est en mesure d'éviter des boucles de couche 2 dans le premier réseau (706), le deuxième réseau (702) ne supportant pas le protocole de gestion de liaison, le procédé (320) permettant de réduire la perte de trafic réseau par l'élément réseau d'acheminement de données de couche 2, le procédé (320) comprenant les étapes qui consistent :
à déterminer le fait (321) de diriger le trafic réseau loin de l'élément réseau d'acheminement de données de couche 2 (204, 704) pendant que l'élément réseau d'acheminement de données de couche 2 (204, 704) n'est pas en mesure d'acheminer le trafic réseau vers le deuxième réseau (702) ;
à diriger (322) le trafic réseau loin de l'élément réseau d'acheminement de données de couche 2 (204, 704) en réponse à l'étape qui consiste à déterminer le fait (321) de diriger le trafic réseau loin de l'élément réseau d'acheminement de données de couche 2 (204, 704) ;
à déterminer le fait (323) de faire passer un trafic réseau supplémentaire dans l'élément réseau d'acheminement de données de couche 2 (204, 704) après que l'élément réseau d'acheminement de données de couche 2 (204, 704) est en mesure d'acheminer le trafic réseau supplémentaire au deuxième réseau (702) ; et
de faire passer (324) le trafic réseau supplémentaire dans l'élément réseau d'acheminement de données de couche 2 (204, 704) en réponse à l'étape qui consiste à déterminer le fait de faire passer le trafic réseau supplémentaire dans l'élément réseau d'acheminement de données de couche 2 (204, 704), dans lequel :
l'étape qui consiste à déterminer le fait (321) de diriger le trafic réseau loin de l'élément réseau (204, 704) comprend le fait de déterminer qu'un port de l'élément réseau (204, 704) n'est pas disponible ; et
l'étape qui consiste à déterminer le fait (323) de faire passer le trafic réseau supplémentaire dans l'élément réseau (204, 704) comprend le fait de déterminer le fait de faire passer le trafic réseau supplémentaire dans l'élément réseau après que le port est disponible,
l'étape qui consiste à diriger (322) le trafic réseau loin de l'élément réseau d'acheminement de données de couche 2 (204, 704) comprend le fait de transmettre un premier message au premier réseau (706), le premier message comportant une valeur de priorité défavorable pour l'élément réseau d'acheminement de données de couche 2 (204, 704), la valeur de priorité défavorable étant en mesure d'amener un chemin primaire et un noeud racine à s'éloigner de l'élément réseau d'acheminement de données de couche 2 (204, 704) ; et
l'étape qui consiste à faire passer (324) le trafic réseau supplémentaire dans l'élément réseau d'acheminement de données de couche 2 (204, 704) comprend le fait de transmettre un deuxième message au premier réseau (706), le deuxième message comportant une valeur de priorité favorable pour l'élément réseau d'acheminement de données de couche 2 (204, 704), la valeur de priorité favorable étant en mesure d'amener le chemin primaire et le noeud racine à retourner à l'élément réseau d'acheminement de données de couche 2 (204, 704),
dans lequel le protocole de gestion de liaison comprend un protocole d'arbre maximal rapide, RSTP, et dans lequel l'étape qui consiste à diriger (322) le trafic réseau loin de l'élément réseau d'acheminement de données de couche 2 (204, 704) comprend le fait de transmettre une unité de données de protocole de pont RSTP, dite unité BPDU, au premier réseau (706), l'unité BPDU RSTP ayant un champ identificateur de pont qui comporte une valeur de priorité accrue, la valeur de priorité accrue augmentant par rapport à une valeur de priorité immédiatement précédente.

2. Procédé (320) de la revendication 1, dans lequel l'étape qui consiste à déterminer que le port de l'élément réseau n'est pas disponible comprend le fait de déterminer qu'un port qui est configuré pour acheminer des données depuis l'élément réseau d'acheminement de données de couche 2 (204, 704) au deuxième réseau n'est pas indisponible, et dans lequel le port comprend un pseudo-fil.

3. Procédé (320) de la revendication 1 dans lequel :
l'étape qui consiste à diriger (322) le trafic réseau loin de l'élément réseau d'acheminement de données de couche 2 (204, 704) comprend le fait d'amener un chemin primaire à s'éloigner de l'élément réseau d'acheminement de données de couche 2 (204, 704) ; et
l'étape qui consiste à faire passer (324) le trafic réseau supplémentaire dans l'élément réseau d'acheminement de données de couche 2 (204, 704) comprend le fait d'amener le chemin primaire à retourner à l'élément réseau d'acheminement de données de couche 2 (204, 704).

4. Procédé (320) de la revendication 1, dans lequel l'étape qui consiste à déterminer le fait (321) de diriger le trafic réseau loin de l'élément réseau comprend le fait de déterminer : qu'un port de l'élément réseau (204, 704) est indisponible ; ou le fait d'effectuer un changement de logiciel sur l'élément réseau (204, 704) ; ou le fait d'effectuer un changement de configuration sur l'élément réseau (204, 704) ; ou qu'une charge de traitement sur l'élément réseau (204, 704) est excessive.

5. Procédé de l'une des revendications 1 à 4, dans lequel le protocole de gestion de liaison comprend un protocole d'arbre maximal, qui fournit un chemin primaire et un chemin alternatif à travers le premier réseau (706), le deuxième réseau (702) ne supportant pas le protocole d'arbre maximal.

6. Élément réseau (204, 704) qui est en mesure d'effectuer un acheminement de données de couche 2, l'élément réseau (204, 704) étant configuré pour être déployé au niveau d'une périphérie d'un premier réseau (706) entre le premier réseau (706) et un deuxième réseau (702), le premier réseau (706) étant en mesure de supporter un protocole de gestion de liaison qui est en mesure de fournir des chemins redondants à travers le premier réseau (706) et est en mesure d'éviter des boucles de couche 2 dans le premier réseau (706), le deuxième réseau (702) ne supportant pas le protocole de gestion de liaison, l'élément réseau (204, 704) étant configuré pour réduire une perte de trafic réseau, l'élément réseau (204, 704) comprenant :
une ou plusieurs cartes de commande (214-1) couplées ensemble ;
une ou plusieurs cartes de ligne (216-1) couplées aux une ou plusieurs cartes de commande (214-1) et couplées ensemble, les une ou plusieurs cartes de ligne (216-1) étant en mesure de fournir une première interface (766) au premier réseau (706) et étant en mesure de fournir une deuxième interface (768) au deuxième réseau (702) ;
un module de protocole de gestion de liaison (270, 770) qui est en mesure de supporter le protocole de gestion de liaison qui est en mesure de fournir les chemins redondants à travers le premier réseau (706) et est en mesure d'éviter les boucles de couche 2 dans le premier réseau (706) ;
un système contrôleur de trafic (218, 718) en communication avec le module de protocole de gestion de liaison (270, 770), le système contrôleur de trafic (218, 718) comportant un module de détermination de régulation de trafic (778) et un module contrôleur de trafic (776) en communication avec le module de détermination de régulation de trafic (778),
le module de détermination de régulation de trafic (778) étant en mesure de déterminer le fait de diriger le trafic réseau loin de l'élément réseau (204, 704), pendant que l'élément réseau (204, 704) n'est pas en mesure d'acheminer le trafic réseau au deuxième réseau (702),
le module contrôleur de trafic (776) étant en mesure de diriger le trafic réseau loin de l'élément réseau (204, 704) lorsqu'il reçoit une instruction provenant du module de détermination de régulation de trafic (778),
le module de détermination de régulation de trafic (778) étant en mesure de déterminer le fait de faire passer un trafic réseau supplémentaire dans l'élément réseau (204, 704) après que l'élément réseau (204, 704) est en mesure d'acheminer le trafic réseau supplémentaire au deuxième réseau (702), et
le module contrôleur de trafic (776) étant en mesure de faire passer le trafic réseau supplémentaire dans l'élément réseau (204, 704), lorsqu'il reçoit une instruction provenant du module de détermination de régulation de trafic (778), où :
le module de détermination de régulation de trafic (778) est en mesure de déterminer le fait de diriger le trafic réseau loin de l'élément réseau (204, 704) après avoir déterminé qu'un port de l'élément réseau (204, 704) est indisponible ;
le module de détermination de régulation de trafic (778) est en mesure de déterminer le fait de faire passer le trafic réseau supplémentaire dans l'élément réseau (204, 704) après avoir déterminé que le port est disponible ;
le module contrôleur de trafic (776) est en outre en mesure de diriger le trafic réseau loin de l'élément réseau (204, 704) en amenant le module de protocole de gestion de liaison (270, 770) à transmettre un message au premier réseau (706) qui comporte une valeur de priorité défavorable, la valeur de priorité défavorable étant en mesure d'amener un chemin primaire et un noeud racine à s'éloigner de l'élément réseau (204, 704) ;
le module contrôleur de trafic (776) est en outre en mesure de faire passer le trafic réseau supplémentaire dans l'élément réseau (204, 704) en amenant le module de protocole de gestion de liaison (270, 770) à transmettre un message au premier réseau (706) qui comporte une valeur de priorité favorable, la valeur de priorité favorable étant en mesure d'amener le chemin primaire et le noeud racine à retourner à l'élément réseau (204, 704) ;
le module de protocole de gestion de liaison (270, 770) comprend un module de protocole d'arbre maximal rapide, RSTP ; et
le module contrôleur de trafic (776) est en outre en mesure de transmettre, lorsqu'il dirige le trafic réseau loin de l'élément réseau d'acheminement de données de couche 2 (204, 704), une unité de données de protocole de pont RSTP, dite unité BPDU, au premier réseau (706), l'unité BPDU RSTP ayant un champ identificateur de pont qui comporte une valeur de priorité accrue, la valeur de priorité accrue augmentant par rapport à une valeur de priorité immédiatement précédente.

7. Élément réseau (204, 704) de la revendication 6, dans lequel le port est configuré pour acheminer des données depuis l'élément réseau (204, 704) au deuxième réseau (702) sur un pseudo-fil.

8. Élément réseau (204, 704) de la revendication 6, dans lequel le deuxième réseau (702) est en mesure de supporter la commutation multi-protocole par étiquette, MPLS.

9. Élément réseau (204, 704) de la revendication 6, dans lequel :
le module contrôleur de trafic (776) est en mesure de diriger le trafic réseau loin de l'élément réseau (204, 704) en amenant un chemin primaire à s'éloigner de l'élément réseau (204, 704) ; et
le module contrôleur de trafic (776) est en mesure de faire passer le trafic réseau supplémentaire dans l'élément réseau (204, 704) en amenant le chemin primaire à retourner vers l'élément réseau (204, 704).

10. Élément réseau (204, 704) de la revendication 6, dans lequel le module de détermination de régulation de trafic (778) est en mesure de déterminer le fait de diriger le trafic réseau loin de l'élément réseau (204, 704) en déterminant : qu'un port de l'élément réseau (204, 704) est indisponible ; ou qu'un changement de logiciel doit être effectué sur l'élément réseau (204, 704) ; ou qu'un changement de configuration doit être effectué sur l'élément réseau (204, 704) ; ou qu'une charge de traitement sur l'élément réseau (204, 704) est excessive.
